(19) **Europäisches Patentamt / European Patent Office / Office européen des brevets**

(11) **EP 2 924 903 B1**

(12) **EUROPEAN PATENT SPECIFICATION**

(45) Date of publication and mention
of the grant of the patent:
**28.11.2018 Bulletin 2018/48**

(21) Application number: **13801064.0**

(22) Date of filing: **23.07.2013**

(51) Int Cl.:
*H04L 1/00* (2006.01)          *H04L 25/03* (2006.01)
*H04L 25/02* (2006.01)        *H04B 7/08* (2006.01)
*H04B 7/0413* (2017.01)

(86) International application number:
**PCT/CN2013/079929**

(87) International publication number:
**WO 2013/182167 (12.12.2013 Gazette 2013/50)**

(54) **SPHERE DECODING DETECTION METHOD AND DEVICE**

KUGELDEKODIERUNGSDETEKTIONSVERFAHREN UND -VORRICHTUNG

PROCÉDÉ ET DISPOSITIF DE DÉTECTION DE DÉCODAGE SPHÉRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2012 CN 201210566917**

(43) Date of publication of application:
**30.09.2015 Bulletin 2015/40**

(73) Proprietor: **ZTE Corporation
Shenzhen, Guangdong 518057 (CN)**

(72) Inventor: **QIAO, Pengpeng
Shenzhen
Guangdong 518057 (CN)**

(74) Representative: **Schröer, Gernot H. et al
Meissner Bolte Patentanwälte
Rechtsanwälte Partnerschaft mbB
Bankgasse 3
90402 Nürnberg (DE)**

(56) References cited:
EP-A1- 2 458 747          WO-A1-2010/005605
CN-A- 101 064 579        CN-A- 101 594 202
CN-A- 102 281 089        CN-A- 102 833 045
US-A1- 2010 322 352

• HSIN LEI LIN ET AL: "A High-Speed SDM-MIMO Decoder Using Efficient Candidate Searching for Wireless Communication", IEEE TRANSACTIONS ON CIRCUITS AND SYSTEMS II: EXPRESS BRIEFS, IEEE, US, vol. 55, no. 3, 1 March 2008 (2008-03-01), pages 289-293, XP011333848, ISSN: 1549-7747, DOI: 10.1109/TCSII.2008.918973

• CAIRE G ET AL: "On maximum-likelihood detection and the search for the closest lattice point", IEEE TRANSACTIONS ON INFORMATION THEORY, IEEE PRESS, USA, vol. 49, no. 10, 1 October 2003 (2003-10-01), pages 2389-2402, XP011102229, ISSN: 0018-9448, DOI: 10.1109/TIT.2003.817444

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

The present invention relates to the field of mobile communications, and more particularly, to a sphere decoding detection method and apparatus.

**Background of the Related Art**

In recent years, a large number of researchers have been carrying out extensive and in-depth research on the signal detection methods in the wireless MIMO communication system. The signal detection methods comprise: Maximum Likelihood Detection (MLD), Zero Forcing (ZF), Minimum Mean Square Error (MMSE) detection, Semi-Definite Relaxation (SDR) and Sphere Decoding (SD) detection and so on.

The MLD has the best performance, but its complexity reaches the exponent level and is almost impossible to be implemented in hardware. Although the calculation of the ZF and MMSE detections is simple, their BER performance is quite poor, and because the semi-definite relaxation detection performs relaxation processing on conditions on the basis of the MLD, there is a lot of performance loss. The SD detection has a bit error performance approaching to the MLD and its complexity is moderate, thus it is a relatively ideal signal detection method.

The complexity of a standard sphere decoding detection method is still high, the implementation of its hardware design is relatively difficult; in order to make the SD detection better implemented in hardware, some improved versions of the SD detection have been proposed. Fincke-Pohst SD (FP-SD) is an effective strategy, and the algorithm searches for the optimal signal point by enumerating all the constellation grid points within a hyper-sphere with a given initial radius. Since the algorithm only narrows the search space once, the selection of its initial radius D is relatively sensitive. Aiming at this defect, some people calls the Schnorr-Euchner algorithm which is applied to the SD as SE-SD, and the depth-first search order is used to search, which achieves good results in terms of reducing the complexity.

The published specification of Chinese Patent Application CN200910084580.6 disclosed a sphere decoding detection method based on depth-first search, although it has a good control on the algorithm complexity, there is some signal performance loss due to the limitation that the maximum number of nodes in the tree search is M.

The published specification of Chinese Patent Application CN201010515931.7 disclosed a depth-first SD detection algorithm based on the QR preprocessing, and the method is only suitable for signal detection in the high SNR region and the MIMO with the low-order modulation, but it is not suitable for signal detection in the low SNR region.

The documents EP2458747A1 and WO2010005605A1 have disclosed the related art of the present invention.

**Summary of the Invention**

The embodiment of the present invention provides a sphere decoding detection method and apparatus according to attached claims 1 and 5 to lower computational complexity on the basis of not reducing the bit error performance.

To solve the abovementioned technical problem, a sphere decoding detection method according to an embodiment of the present invention comprises:

performing pre-processing on a received signal to obtain a signal approximate estimation value $X_{pre}$ of the received signal, deducing an initial square radius $D^2$ of sphere decoding detection according to the $X_{pre}$, determining the size $l$ of a constellation space according to a current signal to noise ratio of the received signal;

preferably according to depth and sphere constraint rules, searching for a search path according to the size $l$ of the constellation space and the initial square radius $D^2$, wherein all nodes through which the search path passes fall within a sphere which takes the initial square radius as a radius;

after searching out a search path, and the sum of local Euclidean distances of the searched-out search path is less than a current square radius, updating the square radius, and within a multidimensional sphere which takes the received signal as a center of the sphere and the updated square radius as a radius, re-searching for a search path until no search path can be searched out, and determining a candidate signal point corresponding to the latest saved search path as an optimal signal estimation point;

wherein the step of performing pre-processing on a received signal to obtain a signal approximate estimation value $X_{pre}$ of the received signal comprises:

performing processing on the received signal via a semi-definite relaxation detector to obtain the approximate estimation value $X_{pre}$ of the received signal;

wherein the step of determining the size $l$ of a constellation space according to a current signal to noise ratio of the received signal comprises:

determining that the value of the size $l$ of the constellation space increases with the current signal to noise ratio of the received signal increasing.

Alternatively, the step of deducing the initial square radius $D^2$ of the sphere decoding detection according to the $X_{pre}$ comprises:

$D^2 = \|Y' - \hat{Y}\|$, wherein $Y' = Q^T Y$, $\hat{Y} = R\hat{X}_{pre}$, and $Y$ is the received signal, $\hat{X}_{pre}$ is a hard decision of $X_{pre}$, $Q$ is a unitary matrix, and $R$ is an upper triangular matrix.

Alternatively, the step of searching for a search path depending on the size $l$ of the constellation space and the initial square radius $D^2$ according to the depth-first and the sphere constraint rules comprises:

generating $l$ child nodes of a current node and calculating a node list, and according to a descending order of priorities of nodes in the node list, calculating the sum $d(x_{(k,t)})$ of local Euclidean distances of nodes in a k-th layer;

judging whether the sum $d(x_{(k,t)})$ of Local Euclidean distances of a node is greater than $D_k^{'2}$ or not, if the $d(x_{(k,t)})$ of the node is greater than $D_k^{'2}$, then cutting off the node, returning to a (k+1)-th layer, and re-expanding searched child nodes; if the $d(x_{(k,t)})$ of the node is not greater than $D_k^{'2}$, when k is not equal to 1, entering into the (k-1)-th layer to search, when k=1, searching out a search path, wherein $D_k^{'2}$ is a component of a vector.

Alternatively, calculating the node list comprises:

searching for constellation nodes falling in a multi-dimensional sphere which takes the received signal as the center and $D^2$ as the square radius, sorting the constellation nodes in the multidimensional sphere according to an ascending order of the local Euclidean distances to obtain a node list corresponding to the constellation nodes in the multi-dimensional sphere.

Alternatively, a sphere decoding detection apparatus, comprising: a pre-processing unit, a square radius calculating unit, a constellation space size determining unit and a path searching unit, wherein:

the pre-processing unit is configured to perform pre-processing on a received signal to obtain a signal approximate estimation value $X_{pre}$ of the received signal;

the square radius calculating unit is configured to deduce an initial square radius $D^2$ of sphere decoding detection according to the $X_{pre}$;

the constellation space size determining unit is configured to determine the size $l$ of a constellation space according to a current signal to noise ratio of the received signal;

the path searching unit is configured to, preferably according to depth first and sphere constraint rules, search for a search path depending on the size $l$ of the constellation space and the initial square radius $D^2$, wherein all the nodes through which the search path passes fall into a sphere which takes the initial square radius as a radius, and after searching out a search path and the sum of local Euclidean distances of the searched-out search path is less than the current square radius, update the square radius, and re-search for a search path within a multidimensional sphere which takes the received signal as a center of the sphere and the updated hyper-sphere square radius as a radius until no search path can be searched out, and determine a candidate signal point corresponding to the latest saved search path as an optimal signal estimation point;

wherein the pre-processing unit preprocessing the received signal to obtain a signal approximate estimation value $X_{pre}$ of the received signal refers to processing the received signal via a semi-definite relaxation detector to obtain the approximate estimation value $X_{pre}$ of the received signal;

wherein the constellation space size determining unit determining the size $l$ of the constellation space according to the current signal to noise ratio of the received signal refers to, determining that the value of the size $l$ of the constellation space increases with the current signal to noise ratio of the received signal increasing.

Alternatively, the square radius calculating unit deducing the initial sphere radius $D^2$ of the square decoding detection according to the $X_{pre}$ refers to calculating $D^2 = \|Y' - \hat{Y}\|$, wherein $Y' = Q^T Y$, $\hat{Y} = R\hat{X}_{pre}$, $Y$ is the received signal, $\hat{X}_{pre}$ is a hard decision of $X_{pre}$, $Q$ is a unitary matrix, and $R$ is an upper triangular matrix;

the path searching unit searching for a search path depending on the size $l$ of the constellation space and the initial square radius $D^2$ according to the depth-first and sphere constraint rules refers to generating $l$ child nodes of a current node and calculating a node list, calculating the sum $d(x_{(k,t)})$ of local Euclidean distances of nodes in a k-th layer according to the descending order of priorities of nodes in the node list, judging whether the sum $d(x_{(k,t)})$ of local Euclidean distances of a node is greater than $D_k^{'2}$ or not, if the $d(x_{(k,t)})$ of the node is greater than $D_k^{'2}$, then cutting off the node, and returning to a (k+1)-th layer, re-expanding searched child nodes; if the $d(x_{(k,t)})$ of the node is not greater than $D_k^{'2}$, when k is not equal to 1, entering into the (k-1)-th layer to search, when k=1, searching out a search path, wherein $D_k^{'2}$ is a component of a vector.

In summary, the embodiment of the present invention has the following advantageous effects:

the embodiment of the present invention is a SNR adaptive MIMO signal detection method based on the sphere decoding detection, and it performs pre-processing with a semi-definite relaxation detector to deduce a relatively tight initial square radius and a traversal order of the tree search, and the relative small initial square radius may reduce the number of nodes accessed in the tree search, and using the nearest constellation grid points from the pre-detected signal to start searching shortens the time for searching out the optimal signal grid point in the tree search;

more importantly, adjusting the number of searched constellation grid points according to different SNR effectively reduces the number of nodes accessed in the tree search while keeping the signal quality (bit error performance) unchanged, therefore the embodiment of the present invention has the advantages of reducing system operation time, improving the real-time processing capability of the system, reducing power consumption of the terminal device, and extending the standby time of the terminal.

**Brief Description of the Drawings**

FIG. 1    is a system model in accordance with an embodiment of the present invention;

FIG. 2    is a flow chart of a sphere decoding detection method in accordance with an embodiment of the present invention;

FIG. 3    is a flow chart of searching for a search path in an implementation of an embodiment of the present invention;

FIG. 4    is a schematic diagram of a method for selecting the size of a constellation space under different signal to noise ratio in an implementation method in accordance with the present application;

FIG. 5    is a diagram of analyzing the bit error performance of the implementation method in accordance with an embodiment of the present invention;

FIG. 6    is a diagram of analyzing the complexity of the implementation method with a simulation in accordance with an embodiment of the present invention;

FIG. 7    is a structural diagram of a sphere decoding detection apparatus in accordance with an embodiment of the present invention.

**Preferred Embodiments of the Invention**

Hereinafter, in conjunction with the accompanying drawings, the embodiments of the present invention will be described in detail. It should be noted that, in the case of no conflict, embodiments and features in the embodiments of the present application may be combined arbitrarily with each other.

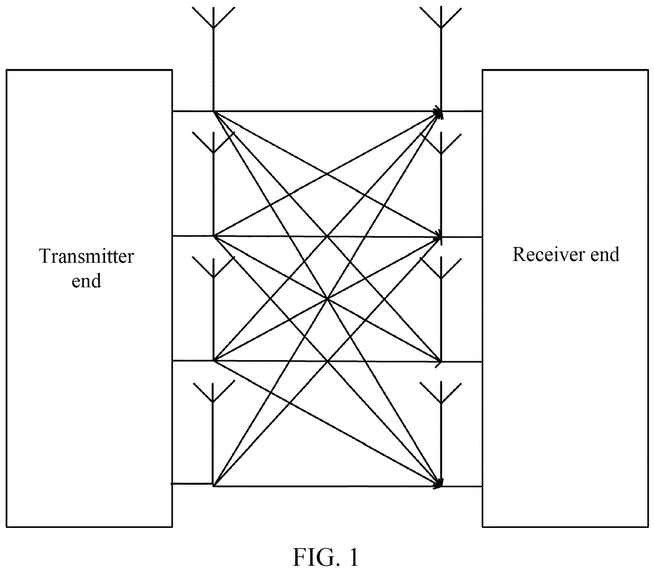

As shown in FIG. 1, a MIMO wireless communication system with 4 transmitters and 4 receivers is taken as an example in the following to illustrate the principle of this method, the channel model of the MIMO wireless communication system with 4 transmitters and 4 receivers is: $\tilde{Y}=\tilde{H}\tilde{X}+\tilde{W}$, wherein $Y$ is a $4\times1$ received signal complex column vector, $X$ is a $4\times1_{\text{transmitted signal}}$ complex column vector, $H$ is a $4\times4$ independent and identically distributed Rayleigh fading channel transmission matrix, elements of the $H$ are $\tilde{h}_{ij} \sim CN(0,1)$ (i = 0,1,2,3,4; j = 1,2,3,4), wherein $CN(0,1)$ is a complex Gaussian distribution with mean of 0 and variance of 1, $\tilde{W}$ is a $4\times1_{\text{ideal}}$ additive complex Gaussian white noise column vector, $\tilde{w}_i \sim CN(0,\sigma^2)$ (i = 1,2,3,4).

In order to facilitate the numerical calculation, the abovementioned complex channel model is converted into a real channel model:

$$Y = \begin{bmatrix} \mathrm{Re}(\tilde{Y}) \\ \mathrm{Im}(\tilde{Y}) \end{bmatrix} = \begin{bmatrix} \mathrm{Re}(\tilde{H}) & \mathrm{Im}(\tilde{H}) \\ \mathrm{Im}(\tilde{H}) & -\mathrm{Re}(\tilde{H}) \end{bmatrix} \times \begin{bmatrix} \mathrm{Re}(\tilde{X}) \\ \mathrm{Im}(\tilde{X}) \end{bmatrix} + \begin{bmatrix} \mathrm{Re}(\tilde{W}) \\ \mathrm{Im}(\tilde{W}) \end{bmatrix}$$

$$= HX + W$$

For the tree search process of the sphere decoding detection, the model can be represented as: $D^2 \geq \|Y - HX\|^2$.

For ease of calculation, QR decomposition is performed on the channel matrix H, that is, $H = QR$, wherein Q is a unitary matrix, and R is an upper triangular matrix, then the above equation is equivalent to:
$D'^2 \geq \|Y'-RX\|^2$, wherein $Y' = Q^TY$, and $\|\bullet\|^2$ represents the norm of the matrix, and $D'^2 \geq \| Y'-RX \|^2$ is represented in the form of matrix:

$$\begin{pmatrix} D_1'^2 \\ D_2'^2 \\ \vdots \\ D_8'^2 \end{pmatrix} \geq \left\| \begin{pmatrix} y_1' \\ y_2' \\ \vdots \\ y_8' \end{pmatrix} - \begin{pmatrix} r_{1,1} & r_{1,2} & \cdots & r_{1,8} \\ & r_{2,2} & \cdots & r_{2,8} \\ & & \ddots & \vdots \\ & & & r_{8,8} \end{pmatrix} \begin{pmatrix} x_1 \\ x_2 \\ \vdots \\ x_8 \end{pmatrix} \right\|^2$$

As can be seen from the abovementioned model that the essence of SD detection is a tree search process, namely the implementation of searching for constellation grid points on a tree, to search out one shortest search path, wherein a vector composed of the corresponding values is the desired signal estimation value.

Hereinafter, in conjunction with the accompanying drawings, the embodiments of the present invention will be described in detail.

The complexity of existing detection methods is relatively high, especially in the low SNR region, the complexity of SD detection algorithm is quite high, and its hardware design implementation is relatively difficult; or even if it can be designed in hardware, its cost is large, and its real-time performance is poor or the power consumption is big, and it is far away from being commercialized in a large range.

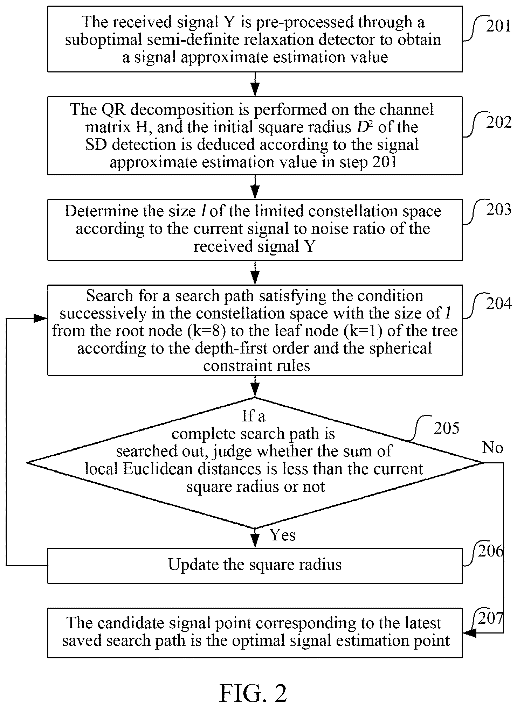

As shown in FIG. 2, the sphere decoding detection method in the present embodiment comprises:
in step 201: the terminal device pre-processes the received signal Y through one suboptimal semi-definite relaxation detector to obtain a signal approximate estimation value $X_{pre}$.

The method for achieving the semi-definite relaxation detector is as follows:
the essence of semi-definite relaxation detection is relaxing the constraint conditions accordingly on the basis of the MLD, and converting it into a semi-positive definite planning problem which can be solved in polynomial time, and it is a convex optimization problem on its nature.

$$\hat{x}_{ML} = \arg\min_{X \in Z} \| Y - HX \|^2;$$

The MLD can be described as:                                                                   according to the definition of the 2-norm,

$$\| Y - HX \|^2 = (Y - HX)^T (Y - HX) = Trace(Qww^T)$$

$$Q = \begin{bmatrix} H^T H & -H^T Y \\ -Y^T H & Y^T Y \end{bmatrix}, \quad w = \begin{bmatrix} X \\ 1 \end{bmatrix},$$

wherein                                                                                    $Trace(\bullet)$ represents the trace of matrix. So the MLD can be converted into:
$\min Trace(QW)$

$$s.t. \quad \begin{cases} \mathrm{diag}(W) = E, \ldots\ldots(a) \\ W = ww^T, \ldots\ldots(b) \end{cases}$$

$$W = ww^T = \begin{bmatrix} XX^T & X \\ X^T & 1 \end{bmatrix},$$

wherein E represents a column vector in which all elements are 1. The relaxation processing is performed on equation (b) in the above equation, so that the problem of MLD detection can be transformed into a convex optimization problem, namely:

$\min Trace(QW)$

$$\text{s.t.} \quad \begin{cases} \mathrm{diag}(W) = E \\ W \succ = 0 \end{cases}$$

where $W \succ = 0$ represents one symmetric and positive definite matrix.

Since the MLD is finally converted into a convex optimization problem through semi-definite relaxation, the problem can be solved with the interior point method, which has the polynomial complexity.

The advantages of selecting the semi-definite relaxation detector to perform pre-detection are:

performing pre-detection can ensure that searching for the optimal signal point within the multidimensional sphere provided with the initial square radius thereafter will not fail.

The semi-definite relaxation pre-detection has better bit error performance than the conventional ZF detection and MMSE detection, especially in the low SNR region, the semi-definite relaxation pre-detection has better bit error performance than the ZF and MMSE pre-detections, so that a smaller radius can be deduced, and unwanted signal points can be eliminated in advance, and the desired optimal signal point can be searched out quickly.

The computational complexity of semi-definite relaxation detection is constant, regardless of low SNR or high SNR, and regardless of using the low-order modulation or the high-order modulation. However, the complexity of the ZF and MMSE is relatively low in the low order modulation and the high signal to noise ratio, if experiencing a high-order modulation or low SNR environment, the complexity will increase rapidly.

In step 202: the terminal device performs QR decomposition on the channel matrix H (in order to facilitate the calculation), and deduces the initial square radius $D^2$ of the SD detection according to the signal approximate estimation value $X_{pre}$ in step 201;

the method for solving $D^2$ is: $D^2 = \|Y' - \hat{Y}\|$

wherein $Y' = Q^T Y$, $\hat{Y} = R\hat{X}_{pre}$, and $\hat{X}_{pre}$ is the hard decision of $X_{pre}$.

In step 203: the terminal device determines the size $l$ of the limited constellation space according to the current signal to noise ratio of the received signal Y;

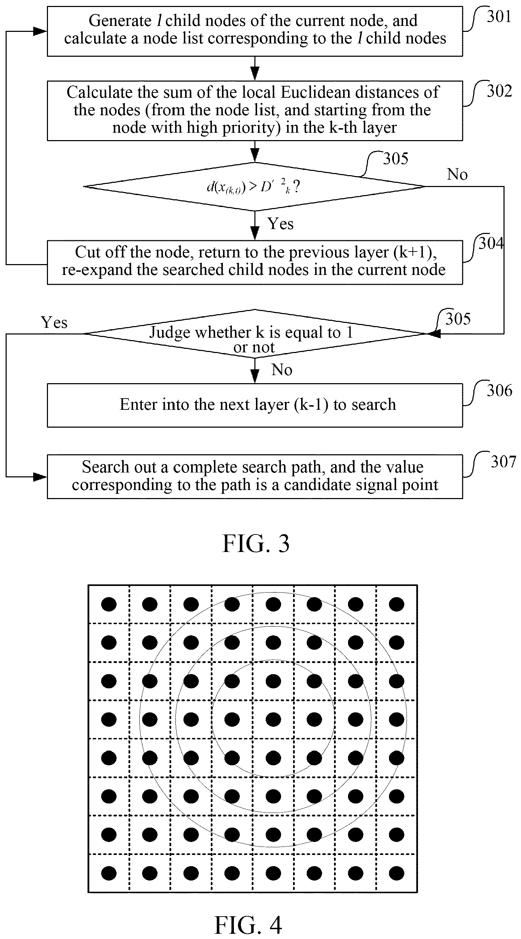

the distribution of the $l$ constellation grid points is shown in FIG. 4. The possible values of $l$ are: 9, 13, 21, 37, 55, 64.

The value of $l$ in different SNR in the present embodiment is corresponded in accordance with the following table:

| SNR(dB): | | | | 0 | 5 | 10 | 15 | 20 |
|---|---|---|---|---|---|---|---|---|
| 25 | | 30 | | | | | | |
| The number of limited constellations $l$: | | | | 9 | 13 | 21 | 37 | |
| 55 | | 64 | | 64 | | | | |

The advantage of limiting the size of the searched constellation grid points at different SNR lies in that: the bit error performance of existing sphere detection methods has small difference with other suboptimal detections under low SNR, in other words, in the low signal to noise ratio regions, there are few really useful signal points, then it may consider to limit the size of the constellation space, adjusting (reduce) the size of the constellation space depending on the difference of signal to noise ratio, which can greatly reduce the computational complexity in the corresponding SNR range under the condition of keeping the BER performance constant.

In step 204: the terminal device searches for a search path satisfying the condition in the constellation space with the size of $l$ from the root node (k=8) to the leaf node (k=1) of the tree according to the depth-first order and the sphere constraint rules;

the depth-first refers to entering into the next layer to search rather than continuing to search for all the nodes meeting the conditions in this layer after searching out one node meeting the conditions in each layer of the tree in the process of executing the tree search.

The spherical constraint is to cut off nodes of the tree that fall outside the sphere.

A search path meeting the condition refers to a search path departing from the root node to the leaf node of the tree, and all the nodes through which the path passes must fall within the sphere.

The order of searching for the nodes in each layer of the tree is: searching according to the order of the node list.

The calculation method of node list is: first searching for constellation nodes falling within the multidimensional sphere which takes the received signal as the center of the sphere and $D^2$ as the square radius, then sorting in accordance with the ascending order of the local Euclidean distances to obtain a node list with constellation nodes to be preferably searched.

The method for calculating the Euclidean distance of the t-th node in the k-th layer as well as the sum of local Euclidean distances is:

$$d(x_{(k,t)}) = \sum_{i=k}^{8} \delta(x_{(k,t)}) = \sum_{i=k}^{8} (| y_k^{'} - \sum_{t=k}^{8} r_{i,t} x_t ) ,$$

$$\delta(x_{(k)}) = | y_k^{'} - \sum_{t=k}^{8} r_{k,t} x_t |^2 .$$

wherein

As shown in FIG. 3, the method for determining the optimal path according to the node list comprises:

in step 301: the terminal device generates $l$ child nodes of the current node, and calculates a node list corresponding to the $l$ child nodes;

in step 302: the terminal device calculates the sum $d(x_{(k,t)})$ of the local Euclidean distances of the nodes (selected from the node list, and starting from the node with high priority) in the k-th layer;

in step 303: the terminal device judges whether $d(x_{(k,t)}) > D_k^{'2}$ $d(x_{(k,t)})$ or not, if $d(x_{(k,t)}) > D_k^{'2}$, proceeding to step 304; if $d(x_{(k,t)})$ is not greater than $D_k^{'2}$, proceeding to step 305;

$D_k^{'2}$ is one component of a vector.

In step 304: the terminal device cuts off the node, returns to the previous layer (k+1), re-expands the searched child nodes in the current node, proceeding to step 301;

in step 305: the terminal device judges whether k is equal to 1 or not, and if k is not equal to 1, proceeding to step 306; if k=1, proceeding to step 307;

in step 306: it is to enter into the next layer (k-1) to search;

in step 307: the terminal device follows the abovementioned steps until k=1, that is, the tree search reaches a leaf node, at this time, a complete search path is searched out, and the value corresponding to the path is a candidate signal point $X = (x_1, x_2, ..., x_8)$.

In step 205: if searching out a complete search path, the terminal device judges whether the sum of local Euclidean distances is less than the current square radius or not, and if the sum of local Euclidean distances is less than the current square radius, proceeding to step 206; if the sum of local Euclidean distances is no less than the current square radius, proceeding to step 207;

in step 206: the terminal device updates the square radius, and takes the sum of local Euclidean distances of the search path as the updated square radius, and in a multidimensional sphere which takes the received signal as the center of the sphere and the updated square radius as the radius, it continues to search for the optimal tree search path according to method of step 204, until a complete search path cannot be searched out after the radius is updated at the latest, that is, a leaf nodes of the tree cannot be searched out, proceeding to step 207;

in step 207: the terminal device takes a candidate signal point corresponding to the latest saved search path as the optimal signal estimation point, and this search ends.

In the following, a simulation is used to test the effects of SD detection in the present embodiment.

Simulation Environment: single user, a MIMO communication system with 4 transmitters and 4 receivers, the channel estimation is an ideal channel estimation, and the channel state information is known at the receiver end, the transmitter end does not perform channel encoding on the signal, the 64QAM modulation is used, and the channel is a non-correlated flat Rayleigh fading channel.

Simulation content and simulation results:

the SD-PRO signal detection method in the present embodiment and the existing SD detection as well as the traditional detection perform bit error performance analysis and average complexity analysis.

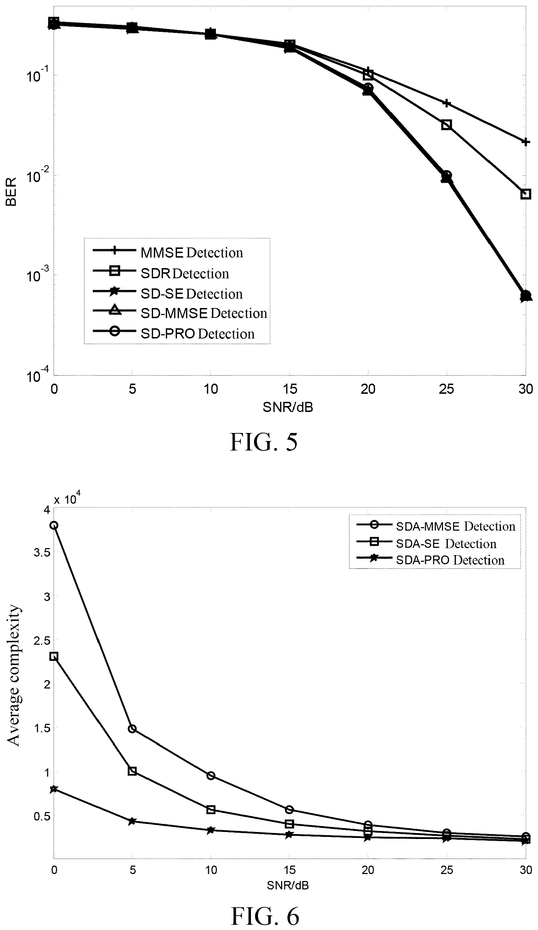

As can be seen from FIG. 5, the present embodiment basically maintains the bit error performance of the existing SD detection, that is, the performance loss is very small, and almost negligible.

As can be seen from the FIG. 6, the SD detection method in the present embodiment has a smaller computational complexity, and especially in the low SNR region, the amplitude of the reduction of calculation complexity is relatively large.

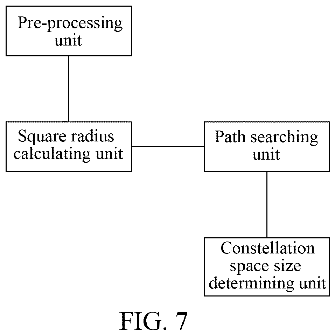

As shown in FIG. 7, the present embodiment further provides a sphere decoding detection apparatus, comprising: a pre-processing unit, a square radius calculating unit, a constellation space size determining unit and a path searching unit, wherein:

the pre-processing unit is configured to pre-process a received signal to obtain a signal approximate estimation value $X_{pre}$ of the received signal;

the square radius calculating unit is configured to deduce the initial square radius $D^2$ of sphere decoding detection according to the $X_{pre}$;

the constellation space size determining unit is configured to determine the size $l$ of the constellation space according to the current signal to noise ratio of the received signal;

the path searching unit is configured to, according to the depth-first and sphere constraint rules, search for a search path depending on the size $l$ of the constellation space and the initial square radius $D^2$, all the nodes through which the search path passes fall into the sphere which takes the initial square radius as the radius, and after searching out a search path and the sum of local Euclidean distances of the searched-out search path is less than the current square radius, update the square radius, and re-search for a search path within a multidimensional sphere which takes the received signal as the center of the sphere and the updated hyper-sphere square radius as the radius, until no search path can be searched out, determine a candidate signal point corresponding to the latest saved search path as the optimum signal estimation point.

The pre-processing unit preprocessing the received signal to obtain an approximate estimation value $X_{pre}$ of the received signal refers to processing the received signal via a semi-definite relaxation detector to obtain the approximate estimation value $X_{pre}$ of the received signal.

The constellation space size determining unit determining the size $l$ of the constellation space in accordance with the current signal to noise ratio of the received signal refers to, determining that the value of the size $l$ of the constellation space increases with the current signal to noise ratio of the received signal increasing.

The square radius calculating unit deducing the initial sphere radius $D^2$ of the square decoding detection according to the $X_{pre}$ refers to calculating $D^2 = \|Y' - \hat{Y}\|$, wherein $Y' = Q^T Y$, $\hat{Y} = R \hat{X}_{pre}$, $Y$ is the received signal, $\hat{X}_{pre}$ is a hard decision of $X_{pre}$, $Q$ is a unitary matrix, and $R$ is an upper triangular matrix;

the path searching unit searching for a search path depending on the size $l$ of the constellation space and the initial square radius $D^2$ according to the depth-first and sphere constraint rules refers to generating $l$ child nodes of the current node and calculating a node list, and according to the descending order of priorities of the nodes in the node list, calculating the sum $d(x_{(k,t)})$ of local Euclidean distances of the nodes in the k-th layer, judging whether the sum $d(x_{(k,t)})$ of local Euclidean distances of nodes is greater than $D_k^{'2}$ or not, if the $d(x_{(k,t)})$ of the nodes is greater than $D_k^{'2}$, then cutting off the nodes, and returning to the (k+1)-th layer, re-expanding the searched child nodes; if the $d(x_{(k,t)})$ of the nodes is not greater than $D_k^{'2}$, when k is not equal to 1, entering into the (k-1)-th layer to search, when k = 1, searching out a search path, wherein $D_k^{'2}$ is one component of a vector.

Those ordinarily skilled in the art can understand that all or some of steps of the abovementioned method may be completed by the programs instructing the relevant hardware, and the abovementioned programs may be stored in a computer-readable storage medium, such as read only memory, magnetic or optical disk. Alternatively, all or some of the steps of the abovementioned embodiments may also be implemented by using one or more integrated circuits. Accordingly, each module/unit in the abovementioned embodiments may be realized in a form of hardware, or in a form of software function modules. The present invention is not limited to any specific form of hardware and software combinations.

The above embodiments are merely provided for describing rather than limiting the technical solutions of the present application, and only merely describe the present application in detail with reference to the preferred embodiments. A person of ordinary skill in the art will understand that the technical solution of the present application can be modified or replaced equivalently, and without departing from the scope of technical solution of the present application, all these modifications and equivalent replacements shall be covered by the scope of the claims of the present application.

**Industrial Applicability**

The embodiment of the present invention is a SNR adaptive MIMO signal detection method based on the sphere decoding detection, and it performs pre-processing with a semi-definite relaxation detector to deduce a relatively tight initial square radius and a traversal order of the tree search, and the relative small initial square radius may reduce the number of nodes accessed in the tree search, and using the nearest constellation grid points from the pre-detected signal to start searching shortens the time for searching out the optimal signal grid point in the tree search; more importantly, adjusting the number of searched constellation grid points according to different SNR effectively reduces the number of nodes accessed in the tree search while keeping the signal quality (bit error performance) unchanged, therefore the embodiment of the present invention has the advantages of reducing system operation time, improving the real-time processing capability of the system, reducing power consumption of the terminal device, and extending the standby time of the terminal.

**Claims**

1. A sphere decoding detection method applied in a MIMO system, comprising:

   performing pre-processing (201) on a received signal to obtain a signal approximate estimation value $X_{pre}$ of the received signal, deducing (202) an initial square radius $D^2$ of sphere decoding detection according to the $X_{pre}$, determining (203) the size $l$ of a constellation space according to a current signal to noise ratio of the received signal;
   searching (204) for a search path according to the size $l$ of the constellation space and the initial square radius $D^2$, wherein all nodes through which the search path passes fall within a sphere which takes the initial square radius as a radius, the searching being performed according to depth first order and sphere constraint rules, the depth-first order consisting in entering into a next layer of a tree to search rather than continuing to search for all the nodes meeting conditions in this layer after searching out one node meeting said conditions in each layer of the tree in the process of executing the tree search, the sphere constraint rules consisting in cutting off nodes of the tree that fall outside the sphere;
   after searching out a search path, and the sum of local Euclidean distances of the searched-out search path is less than a current square radius, updating (206) the square radius, and within a multidimensional sphere which takes the received signal as a center of the sphere and the updated square radius as a radius, re-searching for a search path until no search path can be searched out, and determining (207) a candidate signal point corresponding to the latest saved search path as an optimal signal estimation point;
   wherein the step of performing pre-processing on a received signal to obtain a signal approximate estimation value $X_{pre}$ of the received signal comprises:
   performing processing on the received signal via a semi-definite relaxation detector to obtain the approximate estimation value $X_{pre}$ of the received signal;
   wherein the step of determining the size $l$ of a constellation space according to a current signal to noise ratio of the received signal comprises:
   determining that the value of the size $l$ of the constellation space increases with the current signal to noise ratio of the received signal increasing.

2. The method of claim 1, wherein the step of deducing an initial square radius $D^2$ of sphere decoding detection according to the $X_{pre}$ comprises:
   the $D^2 = \|Y' - \hat{Y}\|$, wherein $Y' = Q^T Y$, $\hat{Y} = R\hat{X}_{pre}$, and $Y$ is the received signal, $\hat{X}_{pre}$ is a hard decision of $X_{pre}$, $Q$ is a unitary matrix, and $R$ is an upper triangular matrix.

3. The method of claim 1, wherein the step of searching for a search path depending on the size $l$ of the constellation space and the initial square radius $D^2$ comprises:

   generating $l$ child nodes of a current node and calculating a node list, and according to a descending order of priorities of nodes in the node list, calculating the sum $d(x_{(k,t)})$ of local Euclidean distances of nodes in a k-th layer;

   judging whether the sum $d(x_{(k,t)})$ of local Euclidean distances of nodes is greater than $D_k^{'2}$ or not, if the $d(x_{(k,t)})$ of the nodes is greater than $D_k^{'2}$, then cutting off the nodes, returning to a (k+1)-th layer, and re-expanding searched child nodes; if the $d(x_{(k,t)})$ of the nodes is not greater than $D_k^{'2}$, when k is not equal to 1, entering into a (k-1)-th layer to search, when k=1, searching out one search path, wherein $D_k^{'2}$ is one component of a vector.

4. The method of claim 3, wherein calculating the node list comprises:
searching for constellation nodes falling in a multi-dimensional sphere which takes the received signal as a center and $D^2$ as the square radius, sorting the constellation nodes in the multidimensional sphere according to an ascending order of the local Euclidean distances to obtain a node list corresponding to the constellation nodes in the multi-dimensional sphere.

5. A sphere decoding detection apparatus applied in a MIMO system, comprising: a pre-processing unit, a square radius calculating unit, a constellation space size determining unit and a path searching unit, wherein:

the pre-processing unit is configured to pre-process a received signal to obtain a signal approximate estimation value $X_{pre}$ of the received signal;
the square radius calculating unit is configured to deduce an initial square radius $D^2$ of sphere decoding detection according to the $X_{pre}$;
the constellation space size determining unit is configured to determine the size $l$ of a constellation space according to a current signal to noise ratio of the received signal;
the path searching unit is configured to, search for a search path depending on the size $l$ of the constellation space and the initial square radius $D^2$, wherein all nodes through which the search path passes fall into a sphere which takes the initial square radius as a radius, the searching being performed according to depth first order and sphere constraint rules, the depth-first order consisting in entering into a next layer of a tree to search rather than continuing to search for all the nodes meeting conditions in this layer after searching out one node meeting said conditions in each layer of the tree in the process of executing the tree search, the sphere constraint rules consisting in cutting off nodes of the tree that fall outside the sphere;
and after searching out a search path and the sum of local Euclidean distances of the searched-out search path is less than a current square radius, update the square radius, and re-search for a search path within a multi-dimensional sphere which takes the received signal as a center of the sphere and updated hyper-sphere square radius as a radius until no search path can be searched out, determine a candidate signal point corresponding to the latest saved search path as an optimal signal estimation point;
wherein the pre-processing unit preprocessing the received signal to obtain a signal approximate estimatation value $X_{pre}$ of the received signal refers to processing the received signal via a semi-definite relaxation detector to obtain the approximate estimation value $X_{pre}$ of the received signal;
wherein the constellation space size determining unit determining the size $l$ of the constellation space according to the current signal to noise ratio of the received signal refers to, determining that the value of the size $l$ of the constellation space increases with the current signal to noise ratio of the received signal increasing.

6. The apparatus of claim 5, wherein:

the square radius calculating unit deducing the initial sphere radius $D^2$ of the square decoding detection according to the $X_{pre}$ refers to calculating the $D^2 = \| Y' - \hat{Y} \|$, wherein $Y' = Q^T Y$, $\hat{Y} = R\hat{X}_{pre}$, $Y$ is the received signal, $\hat{X}_{pre}$ is a hard decision of $X_{pre}$, $Q$ is a unitary matrix, and $R$ is an upper triangular matrix;
the path searching unit searching for a search path depending on the size $l$ of the constellation space and the initial square radius $D^2$ refers to generating $l$ child nodes of a current node and calculating a node list, calculating the sum $d(x_{(k,t)})$ of local Euclidean distances of nodes in a k-th layer according to a descending order of priorities of nodes in the node list, judging whether the sum $d(x_{(k,t)})$ of local Euclidean distances of nodes is greater than $D_k^{'2}$ or not, if the $d(x_{(k,t)})$ of the nodes is greater than $D_k^{'2}$, then cutting off the nodes, and returning to a (k+1)-th layer, re-expanding searched child nodes; if the $d(x_{(k,t)})$ of the nodes is not greater than $D_k^{'2}$, when k is not equal to 1, entering into a (k-1)-th layer to search, when k=1, searching out one search path, wherein $D_k^{'2}$ is one component of a vector.

**Patentansprüche**

1. In einem MIMO-System angewendetes Verfahren zur Kugeldekodierungsdetektion, umfassend:

Durchführen von Vorverarbeitung (201) an einem empfangenen Signal, um einen ungefähren Signalschätzungswert $X_{pre}$ des empfangenen Signals zu erhalten, Ableiten (202) eines anfänglichen Quadratradius $D^2$ der Kugeldekodierungsdetektion gemäß dem $X_{pre}$, Bestimmen (203) der Größe *l* eines Konstellationsraums gemäß einem aktuellen Signal-Rausch-Verhältnisses des empfangenen Signals;

Suchen (204) nach einem Suchpfad gemäß der Größe *l* des Konstellationsraums und dem anfänglichen Quadratradius $D^2$, wobei alle Knoten, durch die der Suchpfad führt, in eine Kugel fallen, die den anfänglichen Quadratradius als einen Radius annimmt, das Suchen gemäß Tiefe erster Ordnung und Kugel-Constraintregeln durchgeführt wird, wobei die Tiefe erster Order aus dem Eintreten in eine nächste Ebene eines zu suchenden Baums besteht, anstatt die Suche für alle Knoten fortzuführen, die Bedingungen in dieser Ebene erfüllen, nachdem ein Knoten herausgesucht wurde, der die Bedingungen in jeder Ebene des Baums beim Verfahren des Ausführens der Baumsuche erfüllt, wobei die Kugel-Constraintregeln aus dem Abschneiden von Knoten des Baums besteht, die aus der Kugel herausfallen;

nach Heraussuchen eines Suchpfads, und die Summe örtlicher euklidischer Abstände des herausgesuchten Suchpfads geringer als ein aktueller Quadratradius ist, Aktualisieren (206) des Quadratradius, und innerhalb einer multidimensionalen Kugel, die das empfangene Signal als Kugelmitte und den aktualisierten Quadratradius als einen Radius annimmt, erneutes Suchen nach einem Suchpfad, bis kein Suchpfad herausgesucht werden kann, und Ermitteln (207) eines Kandidatensignalpunkts, der dem letzten gesicherten Suchpfad entspricht, als einen optimalen Signalschätzungspunkt;

wobei der Schritt des Durchführens von Vorverarbeitung an einem empfangenen Signal, um einen ungefähren Signalschätzungswert $X_{pre}$ des empfangenen Signals zu erhalten, umfasst:

Durchführen von Verarbeitung am empfangenen Signal über einen semidefiniten Relaxionsdetektor, um einen ungefähren Signalschätzungswert $X_{pre}$ des empfangenen Signals zu erhalten;

wobei der Schritt des Bestimmens der Größe *l* eines Konstellationsraums gemäß einem aktuellen Signal-Rausch-Verhältnisses des empfangenen Signals umfasst:

Bestimmen, dass der Wert der Größe *l* des Konstellationsraums mit Zunehmen des aktuellen Signal-Rausch-Verhältnisses zunimmt.

2. Verfahren nach Anspruch 1, wobei der Schritt des Ableitens eines anfänglichen Quadratradius $D^2$ der Kugeldekodierungsdetektion gemäß dem $X_{pre}$ umfasst:
der $D^2 = \|Y' - \tilde{Y}\|$, wobei $Y' = Q^T Y$, $\hat{Y} = R\hat{X}_{pre}$, und $Y$ das empfangene Signal ist, $\hat{X}_{pre}$ eine harte Entscheidung von $X_{pre}$ ist, $Q$ eine unitäre Matrix ist, und $R$ eine obere Dreiecksmatrix ist.

3. Verfahren nach Anspruch 1, wobei der Schritt des Suchens nach einem Suchpfad, abhängig von der Größe *l* des Konstellationsraum und dem anfänglichen Quadratradius $D^2$, umfasst:

Erzeugen von *l* Kinderknoten von einem aktuellen Knoten und Berechnen einer Knotenliste, und Berechnen, gemäß einer absteigenden Reihenfolge von Prioritäten von Knoten in der Knotenliste, der Summe $d(x_{(k,t)})$ örtlicher euklidischer Abstände von Knoten in einer k-ten Ebene;

Beurteilen, ob die Summe $d(x_{(k,t)})$ der örtlichen euklidischen Abstände von Knoten größer als $D_k^{'2}$ ist oder nicht, wenn die $d(x_{(k,t)})$ der Knoten größer als $D_k^{'2}$ ist, dann Abschneiden der Knoten, Zurückgehen zu einer (k+1)-ten Ebene, und erneutes Erweitern gesuchter Kinderknoten; wenn die $d(x_{(k,t)})$ der Knoten nicht größer als $D_k^{'2}$ ist, wenn k ungleich 1 ist, Eintreten in eine (k-1)-te zu suchende Ebene, wenn k=1 ist, Heraussuchen eines Suchpfads, wobei $D_k^{'2}$ eine Komponente eines Vektors ist.

4. Verfahren nach Anspruch 3, wobei das Berechnen des Knotenliste umfasst: Suchen nach Konstellationsknoten, die in eine multidimensionale Kugel fallen, die das empfangene Signal als die Mitte und $D^2$ als den Quadratradius annimmt, Sortieren der Konstellationsknoten in der multidimensionalen Kugel gemäß einer aufsteigenden Reihenfolge der örtlichen euklidischen Abstände, um eine Knotenliste zu erhalten, die den Konstellationsknoten in der multidimensionalen Kugel entspricht.

**5.** In einem MIMO-System angewendete Vorrichtung zur Kugeldekodierungsdetektion, umfassend: eine Vorverarbeitungseinheit, eine den Quadratradius berechnende Einheit, eine die Konstellationsraumgröße bestimmende Einheit und eine Pfadsucheinheit, wobei:

die Vorverarbeitungseinheit zum Vorverarbeiten eines empfangenen Signals konfiguriert ist, um einen ungefähren Signalschätzungswert $X_{pre}$ des empfangenen Signals zu erhalten;

die den Quadratradius berechnende Einheit zum Ableiten eines anfänglichen Quadratradius $D^2$ der Kugeldekodierungsdetektion gemäß dem $X_{pre}$ konfiguriert ist;

die die Konstellationsraumgröße bestimmende Einheit zum Bestimmen der Größe $l$ eines Konstellationsraums gemäß einem aktuellen Signal-Rausch-Verhältnisses des empfangenen Signals konfiguriert ist;

die Pfadsucheinheit so konfiguriert ist, dass sie nach einem Suchpfad abhängig von der Größe $l$ des Konstellationsraums und dem anfänglichen Quadratradius $D^2$ sucht, wobei alle Knoten, durch die der Suchpfad führt, in eine Kugel fallen, der den anfänglichen Quadratradius als einen Radius annimmt, das Suchen gemäß Tiefe erster Ordnung und Kugel-Constraintregeln durchgeführt wird, wobei die Tiefe erster Order aus dem Eintreten in eine nächste Ebene eines zu suchenden Baums besteht, anstatt die Suche für alle Knoten fortzuführen, die Bedingungen in dieser Ebene erfüllen, nachdem ein Knoten herausgesucht wurde, der die Bedingungen in jeder Ebene des Baums beim Verfahren des Ausführens der Baumsuche erfüllt, wobei die Kugel-Constraintregeln aus dem Abschneiden von Knoten des Baums besteht, die aus der Kugel herausfallen;

und nach Heraussuchen eines Suchpfads, und die Summe örtlicher euklidischer Abstände des herausgesuchten Suchpfads geringer als ein aktueller Quadratradius ist, Aktualisieren des Quadratradius, und erneutes Suchen für einen Suchpfad innerhalb einer multidimensionalen Kugel, die das empfangene Signal als Kugelmitte und den aktualisierten Hyperkugel-Quadratradius als einen Radius annimmt bis kein Suchpfad herausgesucht werden kann, Ermitteln eines Kandidatensignalpunkts, der dem letzten gesicherten Suchpfad entspricht, als einen optimalen Signalschätzungspunkt;

wobei sich die Vorverarbeitungseinheit, die das empfangene Signal vorverarbeitet, um einen ungefähren Signalschätzungswert $X_{pre}$ des empfangenen Signals zu erhalten, auf das Verarbeiten des empfangenen Signals über einen semidefiniten Relaxionsdetektor bezieht, um einen ungefähren Signalschätzungswert $X_{pre}$ zu erhalten;

wobei sich die die Konstellationsraumgröße bestimmende Einheit, die die Größe $l$ des Konstellationsraums gemäß dem aktuellen Signal-Rausch-Verhältnisses des empfangenen Signals bestimmt, darauf bezieht, zu ermitteln, dass der Wert der Größe $l$ des Konstellationsraums mit dem aktuellen Signal-Rausch-Verhältnis mit dem zunehmenden Signal zunimmt.

**6.** Vorrichtung nach Anspruch 5, wobei:

sich die den Quadratradius berechnende Einheit, die den anfänglichen Kugelradius $D^2$ der Quadratdecodierungsdetektion gemäß dem $X_{pre}$ ableitet, auf das Berechnen des $D^2 = \|Y' - \hat{Y}\|$ bezieht, wobei $Y' = Q^T Y$, $\hat{Y} = R\hat{X}_{pre}$ und $Y$ das empfangene Signal ist, $\hat{X}_{pre}$ eine harte Entscheidung von $X_{pre}$ ist, $Q$ eine unitäre Matrix ist und $R$ eine obere Dreiecksmatrix ist;

sich die Pfadsucheinheit, die nach einem Suchpfad abhängig von der Größe $l$ des Konstellationsraums und dem anfänglichen Quadratradius $D^2$ sucht, auf Erzeugen von $l$ Kinderknoten eines aktuellen Knotens und Berechnen eine Knotenliste, Berechnen der Summe $d(x_{(k,t)})$ örtlicher euklidischer Abstände von Knoten in einer k-ten Ebene gemäß eine absteigenden Reihenfolge von Prioritäten von Knoten in der Knotenliste bezieht, Beurteilen, ob die Summe $d(x_{(k,t)})$ der örtlichen euklidischen Abstände von Knoten größer als $D_k'^2$ ist oder nicht, wenn die $d(x_{(k,t)})$ der Knoten größer als $D_k'^2$ ist, dann Abschneiden der Knoten und Zurückgehen zu einer (k+1)-ten Ebene, erneutes Erweitern gesuchter Kinderknoten; wenn die $d(x_{(k,t)})$ der Knoten nicht größer als $D_k'^2$ ist, wenn k ungleich 1 ist, Eintreten in eine (k-1)-te zu suchende Ebene, wenn k=1 ist, Heraussuchen eines Suchpfads, wobei $D_k'^2$ eine Komponente eines Vektors ist.

**Revendications**

**1.** Procédé de détection à décodage sphérique appliqué dans un système à entrées multiples sorties multiples, MIMO, comprenant:

réaliser un prétraitement (201) sur un signal reçu pour obtenir une valeur d'estimation approximative de signal $X_{pre}$ du signal reçu, déduire (202) un rayon au carré initial $D^2$ de détection à décodage sphérique selon la $X_{pre}$, déterminer (203) la taille $l$ d'un espace de constellation selon un rapport de signal sur bruit courant du signal reçu; rechercher (204) un chemin de recherche selon la taille $l$ de l'espace de constellation et le rayon au carré initial $D^2$, tous les noeuds à travers lesquels le chemin de recherche passe tombant dans une sphère qui prend le rayon au carré initial comme rayon, la recherche étant réalisée selon des règles de premier ordre de profondeur et de contrainte de sphère, le premier ordre de profondeur consistant à entrer dans une couche suivante d'un arbre pour rechercher plutôt que de continuer à rechercher tous les noeuds satisfaisant des conditions dans cette couche après avoir recherché un noeud satisfaisant lesdites conditions dans chaque couche de l'arbre dans le processus d'exécution de la recherche arborescente, les règles de contrainte de sphère consistant à couper des noeuds de l'arbre qui tombent en dehors de la sphère; après avoir recherché un chemin de recherche, et que la somme de distances euclidiennes locales du chemin de recherche recherché est inférieure à un rayon au carré courant, mettre à jour (206) le rayon au carré, et, dans une sphère multidimensionnelle qui prend le signal reçu comme centre de la sphère et le rayon au carré mis à jour comme rayon, rechercher à nouveau un chemin de recherche jusqu'à ce qu'aucun chemin de recherche ne puisse être recherché, et déterminer (207) un point de signal candidat correspondant au chemin de recherche sauvegardé en dernier comme étant un point d'estimation de signal optimal; l'étape de réalisation d'un prétraitement sur un signal reçu pour obtenir une valeur d'estimation approximative de signal $X_{pre}$ du signal reçu comprenant:

réaliser un traitement sur le signal reçu par l'intermédiaire d'un détecteur de relaxation semi-définie pour obtenir la valeur d'estimation approximative $X_{pre}$ du signal reçu; l'étape de détermination de la taille $l$ d'un espace de constellation selon un rapport de signal sur bruit courant du signal reçu comprenant: déterminer que la valeur de la taille $l$ de l'espace de constellation augmente au fur et à mesure que le rapport de signal sur bruit courant du signal reçu augmente.

2. Procédé selon la revendication 1, dans lequel l'étape de déduction d'un rayon au carré initial $D^2$ de détection à décodage sphérique selon la $X_{pre}$ comprend: le $D^2 = \|Y' - \hat{Y}\|$, où $Y' = Q^T Y$, $\hat{Y} = R\hat{X}_{pre}$, et Y est le signal reçu, $\hat{X}_{pre}$ est une décision ferme de $X_{pre}$, Q est une matrice unitaire et R est une matrice triangulaire supérieure.

3. Procédé selon la revendication 1, dans lequel l'étape de recherche d'un chemin de recherche en fonction de la taille $l$ de l'espace de constellation et du rayon au carré initial $D^2$ comprend:

générer $l$ noeuds enfants d'un noeud courant et calculer une liste de noeuds, et selon un ordre décroissant de priorités de noeuds dans la liste de noeuds, calculer la somme $d(x_{(k,t)})$ de distances euclidiennes locales de noeuds dans une k-ième couche; déterminer si la somme $d(x_{(k,t)})$ de distances euclidiennes locales de noeuds est ou non supérieure à $D_k'^2$, si la $d(x_{(k,t)})$ des noeuds est supérieure à $D_k'^2$, alors couper les noeuds, retourner à une (k+1)-ième couche, et étendre à nouveau des noeuds enfants recherchés; si la $d(x_{(k,t)})$ des noeuds n'est pas supérieure à $D_k'^2$, lorsque k n'est pas égal à 1, entrer dans une (k-1)-ième couche pour effectuer une recherche, lorsque k=1, rechercher un chemin de recherche, $D_k'^2$ étant une composante d'un vecteur.

4. Procédé selon la revendication 3, dans lequel le calcul de la liste de noeuds comprend:

rechercher des noeuds de constellation tombant dans une sphère multidimensionnelle qui prend le signal reçu comme centre et $D^2$ comme rayon au carré, trier les noeuds de constellation dans la sphère multidimensionnelle selon un ordre croissant des distances euclidiennes locales pour obtenir une liste de noeuds correspondant aux noeuds de constellation dans la sphère multidimensionnelle.

**5.** Appareil de détection à décodage sphérique appliqué dans un système MIMO, comprenant: une unité de prétraitement, une unité de calcul de rayon au carré, une unité de détermination de taille d'espace de constellation et une unité de recherche de chemin,

l'unité de prétraitement étant configurée pour prétraiter un signal reçu pour obtenir une valeur d'estimation approximative de signal $X_{pre}$ du signal reçu;

l'unité de calcul de rayon au carré étant configurée pour déduire un rayon au carré initial $D^2$ de la détection à décodage sphérique selon la $X_{pre}$;

l'unité de détermination de taille d'espace de constellation étant configurée pour déterminer la taille $I$ d'un espace de constellation selon un rapport de signal sur bruit courant du signal reçu;

l'unité de recherche de chemin étant configurée pour rechercher un chemin de recherche en fonction de la taille $I$ de l'espace de constellation et du rayon au carré initial $D^2$, tous les noeuds à travers lesquels le chemin de recherche passe tombant dans une sphère qui prend le rayon au carré initial comme rayon, la recherche étant réalisée selon des règles de premier ordre de profondeur et de contrainte de sphère, le premier ordre de profondeur consistant à entrer dans une couche suivante d'un arbre pour rechercher plutôt que de continuer à rechercher tous les noeuds satisfaisant des conditions dans cette couche après avoir recherché un noeud satisfaisant lesdites conditions dans chaque couche de l'arbre dans le processus d'exécution de la recherche arborescente, les règles de contrainte de sphère consistant à couper des noeuds de l'arbre qui tombent en dehors de la sphère; et après avoir recherché un chemin de recherche et que la somme de distances euclidiennes locales du chemin de recherche recherché est inférieure à un rayon au carré courant, mettre à jour le rayon au carré, et rechercher à nouveau un chemin de recherche dans une sphère multidimensionnelle qui prend le signal reçu comme centre de la sphère et le rayon au carré d'hyper-sphère mis à jour comme rayon jusqu'à ce qu'aucun chemin de recherche ne puisse être recherché, déterminer un point de signal candidat correspondant au chemin de recherche sauvegardé en dernier comme étant un point d'estimation de signal optimal;

l'unité de prétraitement prétraitant le signal reçu pour obtenir une valeur d'estimation approximative de signal $X_{pre}$ du signal reçu faisant référence à un traitement du signal reçu par l'intermédiaire d'un détecteur de relaxation semi-définie pour obtenir la valeur d'estimation approximative $X_{pre}$ du signal reçu;

l'unité de détermination de taille d'espace de constellation déterminant la taille $I$ de l'espace de constellation selon le rapport de signal sur bruit courant du signal reçu faisant référence à une détermination du fait que la valeur de la taille $I$ de l'espace de constellation augmente au fur et à mesure que le rapport de signal sur bruit courant du signal reçu augmente.

**6.** Appareil selon la revendication 5, dans lequel:

l'unité de calcul de rayon au carré déduisant le rayon de sphère initial $D^2$ de la détection à décodage sphérique selon la $X_{pre}$ fait référence à un calcul du $D^2 = \|Y'-\hat{Y}\|$, où $Y' = Q^T Y$, $\hat{Y} = R\hat{X}_{pre}$, Y est le signal reçu, $\hat{X}_{pre}$ est une décision ferme de $X_{pre}$, Q est une matrice unitaire et R est une matrice triangulaire supérieure;

l'unité de recherche de chemin recherchant un chemin de recherche en fonction de la taille $I$ de l'espace de constellation et du rayon au carré initial $D^2$ fait référence à une génération de $I$ noeuds enfants d'un noeud courant et à un calcul d'une liste de noeuds, à un calcul de la somme $d(x_{(k,t)})$ de distances euclidiennes locales de noeuds dans une k-ième couche selon un ordre décroissant de priorités de noeuds dans la liste de noeuds, à une détermination du point de savoir si la somme $d(x_{(k,t)})$ de distances euclidiennes locales de noeuds est ou non supérieure à $D_k'^2$, si la $d(x_{(k,t)})$ des noeuds est supérieure à $D_k'^2$, alors à un découpage des noeuds, et à un retour vers une (k+1)-ième couche, à une extension à nouveau de noeuds enfants recherchés; si la $d(x_{(k,t)})$ des noeuds n'est pas supérieure à $D_k'^2$, lorsque k n'est pas égal à 1, à une entrée dans une (k-1)-ième couche pour effectuer une recherche, lorsque k=1, à une recherche d'un espace de recherche, $D_k'^2$ étant une composante d'un vecteur.

FIG. 1

The received signal Y is pre-processed through a suboptimal semi-definite relaxation detector to obtain a signal approximate estimation value $\quad\int 201$

↓

The QR decomposition is performed on the channel matrix H, and the initial square radius $D^2$ of the SD detection is deduced according to the signal approximate estimation value in step 201 $\quad\int 202$

↓

Determine the size $l$ of the limited constellation space according to the current signal to noise ratio of the received signal Y $\quad\int 203$

↓

Search for a search path satisfying the condition successively in the constellation space with the size of $l$ from the root node (k=8) to the leaf node (k=1) of the tree according to the depth-first order and the spherical constraint rules $\quad\int 204$

↓

If a complete search path is searched out, judge whether the sum of local Euclidean distances is less than the current square radius or not $\quad\int 205$ — No

Yes ↓

Update the square radius $\quad\int 206$

↓

The candidate signal point corresponding to the latest saved search path is the optimal signal estimation point $\quad\int 207$

FIG. 2

Generate *l* child nodes of the current node, and calculate a node list corresponding to the *l* child nodes ⟋301

Calculate the sum of the local Euclidean distances of the nodes (from the node list, and starting from the node with high priority) in the k-th layer ⟋302

⟋305

$d(x_{(k,t)}) > D'^2_k$ ?

No

Yes

Cut off the node, return to the previous layer (k+1), re-expand the searched child nodes in the current node ⟋304

Yes

Judge whether k is equal to 1 or not ⟋305

No

Enter into the next layer (k-1) to search ⟋306

Search out a complete search path, and the value corresponding to the path is a candidate signal point ⟋307

FIG. 3

FIG. 4

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200910084580
- CN 201010515931
- EP 2458747 A1
- WO 2010005605 A1